# EUROPÄISCHE PATENTSCHRIFT

(11) **EP 2 494 271 B1**
(45) Veröffentlichungstag und Bekanntmachung des Hinweises auf die Patenterteilung: **19.11.2014**
(21) Anmeldenummer: 10784297.3
(22) Anmeldetag: 24.11.2010
(51) Int. Cl.: F21V 29/02, F21V 29/00, F21Y 101/02, F21S 10/00

(54) **LEUCHTE ZUM AUSLEUCHTEN EINES ZIELBEREICHES MITTELS RÜCKWÄRTSREFLEXION VON LICHT EINES LEUCHTDIODENMODULS AN EINEM REFLEKTOR**
LUMINAIRE FOR ILLUMINATING A TARGET AREA BY MEANS OF RETROREFLECTION OF LIGHT FROM A LIGHT-EMITTING DIODE MODULE ON A REFLECTOR
APPAREIL D'ÉCLAIRAGE DESTINÉ À ÉCLAIRER UNE ZONE CIBLE AU MOYEN D'UNE RÉFLEXION ARRIÈRE DE LUMIÈRE D'UN MODULE DE DIODE ÉLECTROLUMINESCENTE SUR UN RÉFLECTEUR

(30) Priorität: 19.01.2010 DE 102010001007
(43) Veröffentlichungstag der Anmeldung: 05.09.2012
(73) Patentinhaber: OSRAM GmbH, 80807 München (DE)
(72) Erfinder: REHN, Henning, 13407 Berlin (DE)
(86) Internationale Anmeldenummer: PCT/EP2010/068088
(87) Internationale Veröffentlichungsnummer: WO 2011/088922

(56) Entgegenhaltungen:
- US-A1- 2002 182 563
- US-A1- 2007 253 733

## Beschreibung

### Technisches Gebiet

Die Erfindung betrifft eine Leuchte zum Ausleuchten eines Zielbereiches mittels Rückwärtsreflexion an einem Reflektor mit einem Leuchtdiodenmodul mit wenigstens einer Leuchtdiode (LED), sowie einer Kühleinrichtung für das Leuchtdiodenmodul, wobei die Kühleinrichtung eine für das Licht des Leuchtdiodenmoduls transparente Flüssigkeit als Kühlmittel und einen transparenten Kühlmittelbehälter zur Aufnahme des Kühlmittels umfasst.

### Stand der Technik

Ein Beleuchtungssystem, das eine derartige Leuchte nutzt, ist aus der US 2007/0253733 A1 bekannt. Dieses Dokument beschreibt die Verwendung des Beleuchtungssystems für ein Fluoreszenzmikroskop. Eine LED-Lichtquelle ist in einem Brennpunkt eines elliptischen Spiegels positioniert und emittiert ihre Strahlung in einen dem Spiegel zugewandten Halbraum. Der Spiegel reflektiert die auftreffende Strahlung zurück und fokussiert sie auf ein nachfolgendes optisches System. Aufgrund der Rückwärtsreflexion am Reflektor, d.h. Reflexion von Strahlen mit einem Einfallswinkel von unter 45°, lässt es sich nicht vermeiden, dass die LED-Lichtquelle und die zur ihrer Halterung notwendigen mechanischen Aufbauten dem reflektierten Licht selbst im Wege stehen.

Weil die Lichtausbeute einer LED mit steigender Temperatur abnimmt, muss eine Abführung der bei ihrem Betrieb entstehenden Wärme gewährleistet werden, um das Aufheizen der LED während des Betriebs zu minimieren. Bei der Anordnung eines LED-Moduls im Brennpunkt eines rückwärts reflektierenden Reflektors kann dieses nicht durch einen sonst üblichen Kühlkörper entwärmt werden, weil dieser einen noch größeren Teil des am Reflektor reflektierten Lichts abschatten würde. Statt dessen muss die Wärme durch die Halterungen nach außen geführt werden. Auch wenn diese sehr kompakt ausgelegt sein können, um Verluste des reflektierten Lichts möglichst gering zu halten, nehmen sie mehr Raum ein als eine LED alleine und führen daher zu einer Abschattung des reflektierten Lichts. Selbst wenn man die Halterungen transparent gestaltet, wird die darauf auftreffende reflektierte Strahlung beeinflusst und die optische Effizienz der Anordnung verringert.

### Darstellung der Erfindung

Die Aufgabe der vorliegenden Erfindung ist es, eine gattungsgemäße Leuchte bereitzustellen, bei der eine hohe Effizienz der Lichtübertragung und der Entwärmung des LED-Moduls ermöglicht wird, wobei die Entstehung von Artefakten, wie Abschattungen, minimiert sein soll.

Diese Aufgabe wird gelöst durch eine Leuchte mit den Merkmalen von Anspruch 1.

Besonders vorteilhafte Ausgestaltungen finden sich in den abhängigen Ansprüchen.

Der vorliegenden Erfindung liegt die Erkenntnis zugrunde, dass eine Flüssigkühlung eines LED-Moduls so gestaltet werden kann, dass das von der LED emittierte und von dem Reflektor reflektierte Licht in definierter Weise beeinflusst wird, wenn es auf den Kühlmittelbehälter auftrifft. Dazu umfasst der Kühlmittelbehälter eine erste und eine zweite transparente Wand, zwischen denen sich das Kühlmittel befindet und die sich im Wesentlichen senkrecht zur optischen Achse des Reflektors erstrecken und eine solche Fläche besitzen, dass in einem montierten Zustand, in dem das LED-Modul mit dem Reflektor gekoppelt ist, nahezu die gesamte, das heißt mindestens 90 % der an dem Reflektor reflektierten Strahlung des Leuchtdiodenmoduls, die in den Zielbereich gelangt, durch den Kühlmittelbehälter hindurchtritt.

Der Kühlmittelbehälter weist also zwei zueinander parallele Wände auf und deckt den gesamten Querschnitt der vom Leuchtdiodenmodul ausgehenden und vom Reflektor reflektierten Strahlung ab. Die Wände des Kühlmittelbehälters können aus Glas oder aus Kunststoff sein. Bei dem Kühlmittel kann es sich beispielsweise um Wasser handeln, dessen Brechungsindex von 1.33 sich nur wenig von dem niedrigbrechender Gläser oder transparenter Kunststoffe (etwa 1.5) unterscheidet, oder um transparentes Öl. Bei der Auswahl des Kühlmittels und des Materials für den Kühlmittelbehälter ist es jedenfalls vorteilhaft, wenn der Brechungsindex der ersten und der zweiten Wand und der des Kühlmittels so ähnlich sind, dass die Reflexionsverluste an den Grenzflächen zwischen den Wänden und dem Kühlmittel sehr klein sind. Die erste und die zweite Wand des Kühlmittelbehälters können rechteckig, insbesondere quadratisch, sein oder ihr Umriss kann an den Umriss des Reflektors angepasst sein. Es ist dabei von Vorteil, wenn der äußere Rand des Kühlmittelbehälters außerhalb des Bereichs liegt, in den die von der Leuchte ausgehende Strahlung reflektiert wird, um eine Beeinträchtigung der reflektierten Strahlung auszuschließen. Dann spielt es auch keine Rolle, ob der Rand selbst transparent ist oder nicht. Im Idealfall tritt sämtliche an dem Reflektor reflektierte Strahlung des Leuchtdiodenmoduls, die in den Zielbereich gelangt, durch den Kühlmittelbehälter hindurch.

Vorzugsweise ist das LED-Modul so ausgebildet, dass die mindestens eine Leuchtdiode höchstens in einen Halbraum ausstrahlt. Auf diese Weise kann das LED-Modul so angeordnet werden, dass das gesamte ausgestrahlte Licht auf dem Reflektor auftrifft und von diesem in Richtung des Zielbereiches reflektiert wird, so dass das in den Zielbereich gelangende Licht eine definierte Charakteristik hat.

Gemäß einer bevorzugten Ausgestaltung der Erfindung dient die Kühleinrichtung außerdem als Halterung für das Leuchtdiodenmodul. Dadurch werden zwei Funktionen in einem Bauteil vereint, wobei eine Abschattung durch eine zusätzliche Halterung vermieden wird

Gemäß einer besonders bevorzugten Ausgestaltung der Erfindung umfasst das Leuchtdiodenmodul ein mit der Leuchtdiode gekoppeltes Wärmeleitelement, das so in den Kühlmittelbehälter eingelassen ist, dass es mit dem Kühlmittel in Kontakt steht. Auf diese Weise ist das LED-Modul an der Kühleinrichtung befestigt und gleichzeitig ist eine effektive Ableitung der im Betrieb entstehenden Wärme gewährleistet. Ein besonders effizienter Wärmeübergang von dem Wärmeleitelement auf das Kühlmittel lässt sich beispielsweise dadurch erreichen, dass das Wärmeleitelement als massiver Zylinder mit davon abstehenden Finnen ausgebildet ist oder Löcher aufweist, die vom Kühlmittel durchströmt werden. Des weiteren kann das Wärmeleitelement eine raue oder strukturierte Oberfläche aufweisen.

Gemäß einer weiteren besonders bevorzugten Ausgestaltung der Erfindung umfasst das Leuchtdiodenmodul eine Leiterplatte, auf deren Oberseite eine oder mehrere Leuchtdioden montiert sind und deren Unterseite insbesondere mittels eines thermisch leitenden Materials mit dem Wärmeleitelement verbunden ist, wobei die Abmessung des Wärmeleitelements in einer Richtung senkrecht zur optischen Achse des Leuchtdiodenmoduls kleiner oder gleich der entsprechenden Abmessung der Leiterplatte ist. Auf diese Weise reduziert lediglich die Abschattung am LED-Modul die Menge des in den Zielbereich gelangenden Lichts.

Gemäß einer weiteren bevorzugten Ausgestaltung der Erfindung weist die erste Wand, das heißt die im montierten Zustand dem Reflektor zugewandte Wand, des Kühlmittelbehälters leitfähige Beschichtungen zur elektrischen Kontaktierung des Leuchtdiodenmoduls auf, welche transparent ausgeführt sein können.

Gemäß einer weiteren bevorzugten Ausgestaltung der Erfindung sind die erste und die zweite Wand des Kühlmittelbehälters als planparallele Platten ausgebildet. Auf diese Weise wird die durch den Kühlmittelbehälter hindurchgehende Strahlung möglichst wenig beeinflusst.

Gemäß einer weiteren bevorzugten Ausgestaltung der Erfindung ist die Außenseite der ersten und/oder der zweiten Wand des Kühlmittelbehälters zum Verwirklichen einer speziellen optischen Funktion gekrümmt ausgebildet. Dadurch kann der Kühlmittelbehälter gleichzeitig die Funktion eines optischen Elements, beispielsweise einer Linse, übernehmen, wodurch zusätzliche Bauteile und damit Kosten gespart werden können.

Besonders bevorzugt ist auf der Außenseite der ersten und/oder der zweiten Wand des Kühlmittelbehälters ein zweidimensionales Linsenarray ausgebildet. Insbesondere kann der Kühlmittelbehälter die Gestalt eines Wabenkondensors aufweisen, wodurch eine Homogenisierung der durch ihn hindurchgehenden Strahlung bewirkt wird.

### Kurze Beschreibung der Zeichnungen

Im Folgenden soll die Erfindung anhand von Ausführungsbeispielen näher erläutert werden. Die Figuren zeigen:
- Fig. 1: eine schematische Schnittansicht eines ersten Ausführungsbeispiels der erfindungsgemäßen Leuchte; und
- Fig. 2: eine schematische Schnittansicht eines zweiten Ausführungsbeispiels der erfindungsgemäßen Leuchte.

### Bevorzugte Ausführung der Erfindung

In den Figuren sind einander entsprechende Bestandteile mit denselben Bezugszeichen versehen. Die dargestellten Bestandteile sowie die Größenverhältnisse der Bestandteile untereinander sind nicht als maßstabsgerecht anzusehen.

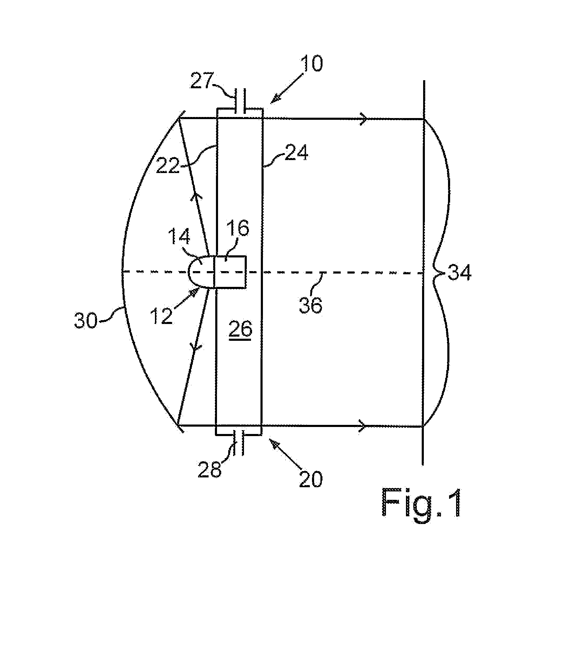

In Fig. 1 ist ein erstes Ausführungsbeispiel einer erfindungsgemäßen Leuchte dargestellt. Die Leuchte umfasst ein LED-Modul 12, das so mit einem Reflektor 30 kombiniert ist, dass das von der oder den LEDs 14 ausgesendete Licht von dem Reflektor 30 in Rückwärtsrichtung reflektiert wird, sowie eine Kühleinrichtung 10 zum Kühlen des LED-Moduls, die gleichzeitig als Halterung für das LED-Modul 12 dient. Das LED-Modul 12 umfasst eine oder mehrere durch einen Halbkreis dargestellte LED 14 und ein Wärmeleitelement 16. Ein LED-Modul 12 kann statt einer auch mehrere LEDs 14 aufweisen.

Die LED beziehungsweise LEDs 14 befinden sich auf einer Leiterplatte, auf deren Unterseite das Wärmeleitelement 16 angeordnet ist. Vorzugsweise handelt es sich bei dem Wärmeleitelement 16 um einen Kupferblock. Sein Umriss ist an die Form der Leiterplatte angepasst, wobei seine Größe in einer Richtung senkrecht zur optischen Achse des LED-Moduls kleiner oder gleich der entsprechenden Größe der Leiterplatte ist. Auf diese Weise wird der Lichtverlust durch Abschattung auf ein Minimum reduziert. Insbesondere ist das Wärmeleitelement 16 als massiver Zylinder ausgebildet und weist davon abstehende Finnen oder Rippen auf, um die im Betrieb aufgenommene Wärme besonders gut an die Kühleinrichtung 10 abgeben zu können.

Die Kühleinrichtung umfasst einen durchströmten Kühlmittelbehälter 20 mit einer ersten Wand 22 und einer zweiten Wand 24, zwischen denen sich ein Kühlmittel 26 befindet. Das Wärmeleitelement 16 ist durch eine entsprechende Öffnung in der ersten Wand 22 so in den Kühlmittelbehälter 20 eingelassen, dass es mit dem Kühlmittel 26 in Kontakt ist und dass das LED-Modul 12 dadurch an dem Kühlmittelbehälter 20 verankert ist. Zur elektrischen Kontaktierung des LED-Moduls 12 ist außen auf der ersten Wand 22 eine in der Figur nicht dargestellte transparente leitfähige Beschichtung ausgebildet, die mit der Leiterplatte des LED-Moduls 12 verbunden ist. Alternativ kann die elektrische Kontaktierung aber auch mit dünnen Drähten erfolgen. Wie aus Fig. 1 ersichtlich ist, weist der Kühlmittelbehälter 20 am oberen und am unteren Rand Zuleitungen 27, 28 auf, durch die das Kühlmittel 26 in den Kühlmittelbehälter 20 hinein und aus diesem herausströmen kann. Beispielsweise strömt das Kühlmittel 26 durch die obere Zuleitung 27 in den Kühlmittelbehälter 20 hinein und durch die untere Zuleitung 28 wieder aus dem Kühlmittelbehälter 20 aus, so dass das Wärmeleitelement 16 von Kühlmittel umströmt wird. Es wäre aber auch denkbar, dass der Kühlmittelbehälter nach dem Befüllen mit Kühlmittel verschlossen wird, und während des Betriebs keine aktive Umwälzung von Kühlmittel erfolgt. Als Kühlmittel 26 wird eine transparente Flüssigkeit verwendet. Dabei kann es sich um Wasser handeln, dessen Brechungsindex von 1,33 sich von dem Brechungsindex von für die Wände des Kühlmittelbehälters 20 infrage kommenden transparenten Materialien, wie beispielsweise Glas mit einem Brechungsindex von 1,41, nicht stark unterscheidet. Die Wände 22 und 24 des Kühlmittelbehälters 20 sind parallel zueinander und senkrecht zur optischen Achse 36 des LED-Moduls 12 ausgerichtet. Ihre Fläche ist größer als die des vom Reflektor 30 reflektierten Bündels.

In Fig. 1 sind zur Veranschaulichung des Strahlenganges die beiden Ränder der von dem LED-Modul 12 emittierten Strahlung eingezeichnet. Die Wände 22 und 24 sind rechteckig oder von ihrem Umriss her an den Reflektor 30 angepasst. An ihren Rändern sind sie durch geeignete Mittel, insbesondere durch Seitenwände, miteinander verbunden. Diese Randbereiche befinden sich vorzugsweise außerhalb des Bereichs der reflektierten Strahlung, um Störungen der reflektierten Strahlung zu vermeiden. Die Innenseiten der Wände des Kühlmittelbehälters 20 sind eben ausgebildet, um eine Wirbelbildung des Kühlmittels 26 an den Wänden beim Hindurchströmen zu vermeiden. Gemäß dem in Fig. 1 gezeigten ersten Ausführungsbeispiel der Erfindung sind auch die Außenseiten insbesondere der ersten Wand 22 und der zweiten Wand 24 des Kühlmittelbehälters 20 eben ausgebildet, so dass es sich bei den beiden Wänden 22 und 24 um planparallele Platten handelt. Auf diese Weise wirkt der gesamte Kühlmittelbehälter 20 auf die auftreffende Strahlung wie eine planparallele Platte.

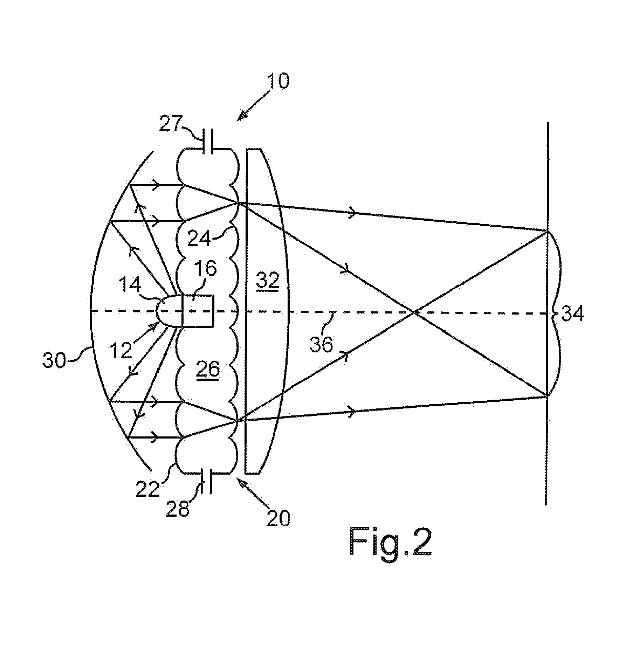

In Fig. 2 ist ein zweites Ausführungsbeispiel der erfindungsgemäßen Leuchte dargestellt. Das Ausführungsbeispiel gemäß Fig. 2 zeichnet sich dadurch aus, dass der Kühlmittelbehälter 20 zusätzlich zur Funktion der Kühlung und der Halterung des LED-Moduls 12 noch eine optische Funktion übernimmt. Ansonsten entspricht die Kühleinrichtung 10 gemäß dem zweiten Ausführungsbeispiel der im Zusammenhang mit dem ersten Ausführungsbeispiel gemäß Fig. 1 gegebenen Beschreibung. Der in Fig. 2 gezeigte Kühlmittelbehälter 20 ist als Wabenkondensor ausgebildet. Dazu sind auf den Außenseiten der ersten Wand 22 und der zweiten Wand 24 des Kühlmittelbehälters 20 Linsenarrays ausgebildet. Dadurch wird eine Homogenisierung der durch den Kühlmittelbehälter 20 hindurchgehenden Strahlung bewirkt. In Ausbreitungsrichtung der Strahlung gesehen ist nach dem Kühlmittelbehälter 20 noch eine Fresnellinse 32 zur Bündelung der Strahlung auf den Zielbereich 34 vorgesehen. Durch die Integration der optischen Funktion eines Wabenkondensors in den Kühlmittelbehälter 20 lassen sich sowohl Platz als auch Material und dadurch Kosten sparen. In ähnlicher Weise lassen sich andere gewünschte optische Funktionen durch geeignete Ausbildung der Wände 22 und 24 des Kühlmittelbehälters 20 verwirklichen.

Bei beiden Ausführungsbeispielen ist der Kühlmittelbehälter 20 so in der Leuchte angeordnet, dass das LED-Modul 12, dessen LED oder LEDs höchstens in einen Halbraum ausstrahlt, sich in der Nähe des Brennpunktes des Reflektors befindet. Somit sammelt der Reflektor 30 die komplette LED-Strahlung ein und kann diese durch den Kühlmittelbehälter senden. Als Reflektoren werden insbesondere Kegelschnittfiguren, wie Paraboloide oder Ellipsoide verwendet. Die Nutzung eines Reflektors in Rückwärtsreflexion bewirkt somit eine gute Ausnutzung der Strahlung bei einfachem Aufbau.

Die erfindungsgemäße Leuchte lässt sich so gestalten, dass sie in vorhandene Lampen mit einem Reflektor eingebaut werden kann, so dass ein Retrofit bisheriger Halogenlampenlösungen möglich ist. Bevorzugte Anwendungen für die erfindungsgemäße Lösung sind medizinische Leuchten, Anwendungen kleiner Etendue, wie Projektoren, oder Anwendungen hoher Achslichtstärke, wie Scheinwerfer. Sie ist besonders effizient und kostengünstig, wenn ein großer Durchmesser der Optik notwendig ist.

## Patentansprüche

1. Leuchte zum Ausleuchten eines Zielbereiches (34) mittels Rückwärtsreflexion an einem Reflektor (30) mit
- einem Leuchtdiodenmodul (12) mit wenigstens einer Leuchtdiode (14) und
- einer Kühleinrichtung (10) für das Leuchtdiodenmodul (12), wobei die Kühleinrichtung eine für das Licht des Leuchtdiodenmoduls transparente Flüssigkeit (26) als Kühlmittel und einen transparenten Kühlmittelbehälter (20) zur Aufnahme des Kühlmittels (26) umfasst,
**dadurch gekennzeichnet, dass**
der Kühlmittelbehälter (20) eine erste (22) und eine zweite transparente Wand (24) umfasst, zwischen denen sich das Kühlmittel (26) befindet und die sich im Wesentlichen senkrecht zur optischen Achse (36) des Reflektors (30) erstrecken und eine solche Fläche besitzen, dass in einem montierten Zustand, in dem das Leuchtdiodenmodul (12) und die Kühleinrichtung (10) mit dem Reflektor (30) verbunden sind, mindestens 90 % der an dem Reflektor (30) reflektierten Strahlung des Leuchtdiodenmoduls (12), die in den Zielbereich (34) gelangt, durch den Kühlmittelbehälter (20) hindurchtritt.

2. Leuchte nach Anspruch 1,
**dadurch gekennzeichnet, dass**
die erste (22) und die zweite Wand (24) des Kühlmittelbehälters (20) eine solche Fläche besitzen, dass sämtliche an dem Reflektor (30) reflektierte Strahlung des Leuchtdiodenmoduls (12), die in den Zielbereich (34) gelangt, durch den Kühlmittelbehälter (20) hindurchtritt.

3. Leuchte nach Anspruch 1 oder 2,
**dadurch gekennzeichnet, dass**
die wenigstens eine Leuchtdiode (14) so ausgebildet ist, dass sie höchstens in einen Halbraum ausstrahlt.

4. Leuchte nach einem der Ansprüche 1 bis 3,
**dadurch gekennzeichnet, dass**
die Kühleinrichtung außerdem als Halterung für das Leuchtdiodenmodul (12) dient.

5. Leuchte nach Anspruch 4,
**dadurch gekennzeichnet, dass**
das Leuchtdiodenmodul (12) ein mit der wenigstens einen Leuchtdiode (14) gekoppeltes Wärmeleitelement (16) umfasst, das so in den Kühlmittelbehälter (20) eingelassen ist, dass es mit dem Kühlmittel (26) in Kontakt steht.

6. Leuchte nach Anspruch 5,
**dadurch gekennzeichnet, dass**
das Wärmeleitelement (16) als massiver Zylinder mit davon abstehenden Finnen ausgebildet ist.

7. Leuchte nach Anspruch 5 oder 6,
**dadurch gekennzeichnet, dass**
das Leuchtdiodenmodul (12) eine Leiterplatte umfasst, auf deren Oberseite ein oder mehrere Leuchtdioden (14) montiert sind und deren Unterseite insbesondere mittels eines thermisch leitenden Materials mit dem Wärmeleitelement (16) verbunden ist, wobei die Abmessung des Wärmeleitelements (16) in einer Richtung senkrecht zur optischen Achse des Leuchtdiodenmoduls (12) kleiner oder gleich der entsprechenden Abmessung der Leiterplatte ist.

8. Leuchte nach einem der vorhergehenden Ansprüche,
**dadurch gekennzeichnet, dass**
die erste Wand (22) des Kühlmittelbehälters (20) leitfähige Beschichtungen zur elektrischen Kontaktierung des Leuchtdiodenmoduls (12) aufweist.

9. Leuchte nach einem der vorhergehenden Ansprüche,
**dadurch gekennzeichnet, dass**
die erste (22) und die zweite Wand (24) des Kühlmittelbehälters (20) als planparallele Platten ausgebildet sind.

10. Leuchte nach einem der Ansprüche 1 bis 8,
**dadurch gekennzeichnet, dass**
die Außenseite der ersten (22) und/oder der zweiten Wand (24) des Kühlmittelbehälters (20) zum Verwirklichen einer optischen Funktion gekrümmt ausgebildet ist.

11. Leuchte nach Anspruch 10,
**dadurch gekennzeichnet, dass**
auf der Außenseite der ersten (22) und/oder der zweiten Wand (24) des Kühlmittelbehälters (20) ein zweidimensionales Linsenarray ausgebildet ist.

## Claims

1. Luminaire for illuminating a target area (34) by means of retroreflection on a reflector (30), comprising
- a light-emitting diode module (12) having at least one light-emitting diode (14) and
- a cooling device (10) for the light-emitting diode module (12), the cooling device comprising a liquid (26) that is transparent to the light from the light-emitting diode module as a coolant and a transparent coolant container (20) to hold the coolant (26),
**characterized in that**
the coolant container (20) comprises a first (22) and a second transparent wall (24), between which the coolant (26) is located and which extend substantially perpendicular to the optical axis (36) of the reflector (30) and have an area such that, in a mounted state, in which the light-emitting diode module (12) and the cooling device (10) are connected to the reflector (30), at least 90% of the radiation from the light-emitting diode module (12) which is reflected on the reflector (30) and reaches the target area (34) passes through the coolant container (20).

2. Luminaire according to Claim 1,
**characterized in that**
the first (22) and the second wall (24) of the coolant container (20) have an area such that all the radiation from the light-emitting diode module (12) which is reflected on the reflector (30) and reaches the target area (34) passes through the coolant container (20).

3. Luminaire according to Claim 1 or 2,
**characterized in that**
the at least one light-emitting diode (14) is formed in such a way that it emits at most in a hemisphere.

4. Luminaire according to one of Claims 1 to 3,
**characterized in that**
the cooling device additionally serves as a mount for the light-emitting diode module (12).

5. Luminaire according to Claim 4,
**characterized in that**
the light-emitting diode module (12) comprises a heat-conducting element (16) which is coupled to the at least one light-emitting diode (14) and which is incorporated into the coolant container (20) in such a way that it is in contact with the coolant (26).

6. Luminaire according to Claim 5,
**characterized in that**
the heat-conducting element (16) is formed as a solid cylinder with fins projecting therefrom.

7. Luminaire according to Claim 5 or 6,
**characterized in that**
the light-emitting diode module (12) comprises a printed circuit board, on the top side of which one or more light-emitting diodes (14) are mounted, and the underside of which is connected by means of a thermally conductive material to the heat-conducting element (16), the dimension of the heat-conducting element (16) in a direction perpendicular to the optical axis of the light-emitting diode module (12) being less than or equal to the corresponding dimension of the printed circuit board.

8. Luminaire according to one of the preceding claims,
**characterized in that**
the first wall (22) of the coolant container (20) has conductive coatings to make electrical contact with the light-emitting diode module (12).

9. Luminaire according to one of the preceding claims,
**characterized in that**
the first (22) and the second wall (24) of the coolant container (20) are formed as plane-parallel plates.

10. Luminaire according to one of Claims 1 to 8,
**characterized in that**
the outer side of the first (22) and/or the second wall (24) of the coolant container (20) is formed so as to be curved in order to implement an optical function.

11. Luminaire according to Claim 10,
**characterized in that**
a two-dimensional lens array is formed on the outer side of the first (22) and/or the second wall (24) of the coolant container (20).

## Revendications

1. Appareil d'éclairage destiné à éclairer une zone cible (34) au moyen d'une réflexion arrière sur un réflecteur (30), comprenant
- un module de diode électroluminescente (12) présentant au moins une diode électroluminescente (14) et
- un dispositif de refroidissement (10) pour le module de diode électroluminescente (12), le dispositif de refroidissement comprenant comme réfrigérant un liquide (26) transparent pour la lumière du module de diode électroluminescente et un contenant de réfrigérant (20) transparent destiné à recevoir le réfrigérant (26),
**caractérisé en ce que**
le contenant de réfrigérant (20) comprend une première (22) et une seconde paroi (24) transparentes, entre lesquelles se situe le réfrigérant (26) et qui s'étendent sensiblement perpendiculairement à l'axe optique (36) du réflecteur (30) et possèdent une surface telle que dans un état monté où le module de diode électroluminescente (12) et le dispositif de refroidissement (10) sont reliés au réflecteur (30), au moins 90 % du rayonnement du module de diode électroluminescente (12) réfléchi sur le réflecteur (30) et parvenant dans la zone cible (34) passe à travers le contenant de réfrigérant (20).

2. Appareil d'éclairage selon la revendication 1,
**caractérisé en ce que**
la première (22) et la seconde paroi (24) du contenant de réfrigérant (20) possèdent une surface telle que la totalité du rayonnement du module de diode électroluminescente (12) réfléchi sur le réflecteur (30) et parvenant dans la zone cible (34) passe à travers le contenant de réfrigérant (20).

3. Appareil d'éclairage selon la revendication 1 ou 2,
**caractérisé en ce que**
la au moins une diode électroluminescente (14) est conçue de telle façon qu'elle émet tout au plus dans un demi-espace.

4. Appareil d'éclairage selon l'une des revendications 1 à 3,
**caractérisé en ce que**
ledit dispositif de refroidissement sert en outre de support pour le module de diode électroluminescente (12).

5. Appareil d'éclairage selon la revendication 4,
**caractérisé en ce que**
le module de diode électroluminescente (12) comprend un élément conducteur de chaleur (16) couplé à la au moins une diode électroluminescente (14) et encastré dans le contenant de réfrigérant (20) de manière à être en contact avec le réfrigérant (26).

6. Appareil d'éclairage selon la revendication 5,
**caractérisé en ce que**
l'élément conducteur de chaleur (16) est conçu sous forme de cylindre massif présentant des pattes dépassant de celui-ci.

7. Appareil d'éclairage selon la revendication 5 ou 6,
**caractérisé en ce que**
le module de diode électroluminescente (12) comprend une carte de circuit imprimé sur la face supérieure de laquelle une ou plusieurs diodes électroluminescentes (14) sont montées et dont la face inférieure est reliée à l'élément conducteur de chaleur (16), en particulier au moyen d'un matériau thermiquement conducteur, les dimensions de l'élément conducteur de chaleur (16), dans un sens perpendiculaire à l'axe optique du module de diode électroluminescente (12), étant inférieures ou égales aux dimensions correspondantes de la carte de circuit imprimé.

8. Appareil d'éclairage selon l'une des revendications précédentes,
**caractérisé en ce que**
la première paroi (22) du contenant de réfrigérant (20) présente des revêtements conducteurs pour la mise en contact électrique du module de diode électroluminescente (12).

9. Appareil d'éclairage selon l'une des revendications précédentes,
**caractérisé en ce que**
la première (22) et la seconde paroi (24) du contenant de réfrigérant (20) sont réalisées sous forme de plaques à faces planes et parallèles.

10. Appareil d'éclairage selon l'une des revendications 1 à 8,
**caractérisé en ce que**
le côté extérieur de la première (22) et/ou de la seconde paroi (24) du contenant de réfrigérant (20) est de forme courbe pour réaliser une fonction optique.

11. Appareil d'éclairage selon la revendication 10,
**caractérisé en ce que**
sur le côté extérieur de la première (22) et/ou de la seconde paroi (24) du contenant de réfrigérant (20), un système de lentilles à deux dimensions est réalisé.
